(19) Europäisches Patentamt
European Patent Office
Office européen des brevets

(11)  **EP 2 501 946 B1**

(12)  **EUROPEAN PATENT SPECIFICATION**

(45) Date of publication and mention
of the grant of the patent:
**18.05.2016   Bulletin 2016/20**

(51) Int Cl.:
**F16C 19/38** (2006.01)     **F16C 33/60** (2006.01)
**F03D 80/70** (2016.01)

(21) Application number: **11732451.7**

(22) Date of filing: **14.07.2011**

(86) International application number:
**PCT/EP2011/062058**

(87) International publication number:
**WO 2012/069212 (31.05.2012 Gazette 2012/22)**

(54) **DOUBLE ROW TAPERED BEARING ASSEMBLY AND WIND TURBINE**

DOPPELREIHIGE KEGELFÖRMIGE LAGERBAUGRUPPE UND WINDTURBINE DAMIT

ENSEMBLE ROULEMENT À ROULEAUX CONIQUES À DEUX RANGÉES ET TURBINE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2010  EP 10192048**

(43) Date of publication of application:
**26.09.2012   Bulletin 2012/39**

(73) Proprietor: **Siemens Aktiengesellschaft
80333 München (DE)**

(72) Inventor: **STIESDAL, Henrik
DK-5000 Odense C (DK)**

(56) References cited:
**DE-A1-102007 042 770     DE-A1-102007 062 056
FR-A1- 2 592 107     JP-A- 11 321 211
JP-A- 2010 164 101     US-A- 2 615 767
US-A- 4 056 272**

## Description

The present invention relates to a double row tapered bearing assembly and to a wind turbine.

During extreme loading on the wind turbine rotor there is a risk that the internal bearing forces will cause the two inner rings of a double row tapered bearing to slide relative to each other. This is often referred to as cone shifting. When the load is reduced the two inner rings will then end up in a position of relative out of roundness. This geometric deviation will increase the hertzian stress level in the contact area between roller and raceway, which will increase the probability of bearing failure.

This difficulty can be solved by shrink fitting a reinforcement tube inside the two inner rings. A difficulty with this solution is that it relies on high accuracy of the diameter of the shrink fitted tube. Moreover, it makes disassembly very difficult. Another possibility is to have a T- or I-shaped ring between the two inner rings. A basic difficulty with this solution is that it relies on high accuracy of the diameter of the rings to ensure that it fits properly.

The document DE 10 2007 062 056 A1 discloses a multi-row roller bearing comprising a split outer ring, which consists of at least two coaxial rings, the at least two rings of which rest one on the other with the contact surface on their axial faces. The contact surface of a ring comprises at least one recess and the contact surface facing said contact surface of the ring resting against it comprises at least one connecting element engaging in said recess. The connecting element can be a separate element.

The document JP 11321211 (A) discloses a taper roller group of a unit bearing, which should be protected from penetration of water or dust to ensure the performance of the bearing by arranging an annular sealant between both butted end surfaces of a pair of inner races. This is realized by an O-ring consisting of an annular sealant which is fitted to a pair of annular groups.

In the document DE 10 2007 042 770 (A1) a rotor bearing for a wind turbine is described. Between two adjacent bearing rings a distance ring is positioned, which may be located in nuts in the adjacent surfaces of the bearing rings.

Document FR 2 592 107 discloses a sealed rolling bearing with at least one annular groove with a bottom which is machined in the supporting surface and/or the end phase. In the annular groove a closed sealing ring is installed, which is resiliently flexible in axial and circumferential direction.

In the document JP 2010-164101 (A) describes a sealing type conical roller bearing for a roll neck capable of preventing infiltration of water or the like into a bearing interior by eliminating a pressure difference between a bearing exterior and the bearing interior. The seal comprises an elastic seal member.

The document US 2,615,767 discloses a roller bearing with a spacing ring.

It is a first objective of the present invention to provide a double row tapered bearing assembly which reduces cone shifting in a cost effective and easy way. It is a second objective of the present invention to provide an advantageous wind turbine.

The first objective is solved by a double row tapered bearing assembly as claimed in claim 1. The second objective is solved by a wind turbine as claimed in claim 13. The depending claims define further developments of the invention.

The inventive double row tapered bearing assembly comprises a first portion and a second portion. The first portion comprises a first ring and a second ring. The first ring is connected with the second portion by means of at least one row of tapered rollers or at least one row of balls. The second ring is connected with the second portion by means of at least one row of tapered rollers or at least one row of balls.

The first ring and the second ring each comprise at least one groove. The at least one groove in the first ring faces the at least one groove in the second ring. The at least one groove of the first ring and the facing at least one groove in the second ring from a cavity. At least one member is placed in the cavity. The at least one member comprises brass, bronze, soft non-hardened steel or heat-treated steel with a fracture elongation of at least 5%. By placing at least one member in the cavity formed by grooves of the first ring and the second ring a sliding of the rings in radial direction is avoided. This means that cone shifting is avoided as the member in the grooves of the bearing keeps the first ring and the second ring together in case of radial movement and/or radial forces acting on the bearing. Moreover, the invention is simpler than prior art solutions and easier to produce with larger tolerances. Moreover, the risk of fretting corrosion is low by having small areas of line contact under high surface pressure.

The inventive bearing may comprise a rotation axis. The first portion may be located radially inside of the second portion or the second portion may be located radially inside of a first portion.

Preferably the groove may have a rectangular or a tapered or an at least partly circular or an at least partly ellipsoid or an at least partly hypoellipsoid or an at least partly hyperellipsoid cross section. For example, the groove may have a half ellipsoid cross section.

The at least one member placed in the groove may have a rectangular or a tapered or an at least partly circular or an at least partly ellipsoid or an at least partly hypoellipsoid or an at least partly hyperellipsoid cross section. In this way the at least one member fits into the space in the grooves of the first and the second ring and sliding of the rings in radial direction is avoided.

Advantageously the at least one member placed in the groove comprises at least one segment, for instance a segment of a ring. This has the advantage, that the segments of the member can be easily placed in the groove. Moreover, a disassembly is very easy.

Preferably, the at least one groove and/or the at least one member placed in the groove comprise at least one positive slip angle. Providing the member, which preferably comprises a number of segmented rings, and/or the grooves in the first ring and the second ring of the bearing with one or more positive slip angles an easy assembly of a segmented ring or member into the grooves can be ensured.

Advantageously, the at least one member placed in the groove may have a cross sectional diameter of at least 5 mm, for example 8 mm. Furthermore, the at least one member placed in the groove may run all around the circumference of the groove except for a small gap to allow for tolerances. For example, the whole bearing may comprise a diameter size of e.g. 3000 mm or more and a width of e.g. 300 mm or more for a direct drive wind turbine. The wind turbine can be a 3 MW direct drive wind turbine.

The first ring and the second ring may comprise one or more grooves where a segmented ring shaped member can be placed in each groove. For example, the grooves may comprise preferably a cross section of somewhere between a half and one third or even less of an ellipsoid and/or hypoellipsoid and/or hyperellipsoid. This gives an open groove in which it is easy to fit a segmented ring shaped member.

Preferably, the at least one member placed in the groove may comprise or consist of at least one thread with a fracture elongation of at least 5 %. Moreover, a bend double thread may be used. Advantageously the at least one member placed in the groove comprises brass and/or bronze and/or non-hardened steel and/or heat-treated steel.

For example, the segmented ring shaped member may comprise only one segment. The segment may be made by using a thread of brass or bronze or soft non-hardened steel or heat-treated steel or similar materials with a fracture elongation of 5 % or more and with a cross sectional diameter of e.g. 8 mm. Alternatively a bend double thread maybe used giving a cross sectional diameter of e.g. 2 x 8 mm lying next to each other. The grooves in the first ring and the second ring, which may be radially inner rings, can than e.g. comprise a hypoellipsoid cross section e.g. with a = 10, b = 7.85 and n = 1.7 using the Lame-curve formula $\left|\dfrac{x}{a}\right|^n + \left|\dfrac{y}{b}\right|^n = 1$ .

The member with for example a circular cross section may then be pressed into the two grooves in the inner rings giving a tight connection which may even be oil tight. In this way a further seal connection between the first ring and the second ring can be avoided.

The at least one member placed in the groove may comprise two sides with a different tapering angle. Moreover, the at least one member placed in the groove may comprise a side with a tapering angle which is less than the tapering angle of the side of the groove facing the side of the member. By using tapered grooves even larger tolerances can be used by the production of the grooves and the members.

For example, the rectangular segments of the member may comprise tapered end parts. Also here larger tolerances can be used by the production of the grooves and the segments of a member. For example, only one of the grooves may be tapered. Moreover, the members that are placed in the grooves may be tapered in one or both sides of the sides that fit into the grooves of the rings. This ensures a better fit to the grooves and larger tolerances can be used by the production of the members. Furthermore, one side or end of the members may comprise a different tapering angle than the other side or end of the member. The members may comprise a tapered angle that is less than a tapered angle of the grooves of the first ring and the second ring.

The at least one member may preferably comprise segments with an arc angle between 5° and 180°, advantageously between 10° and 20°. The segments of the segmented ring may preferably comprise an arc angle of 10 to 20 degrees giving respectively 18 to 36 segments. Also an arc angle of 5 to 10 degrees may be possible or even an arc angle of the segments of more than 20 degrees may be used though preferably not more than 180 degrees. What arc angle to choose depends on the actual size of the segmented ring due to transportation issues and due to the time it takes to install the chosen number of segments.

Moreover, the at least one member can comprise at least one plastic deformable area, for example at least one local plastic deformable area, and/or at least one protrusion, for example a plastic deformable protrusion. The at least one plastic deformable area and/or protrusion ensures that the member fits tightly to the grooves when the first ring and the second ring are pressed together by a given force. In this way larger tolerances can be used by the production of the members and the grooves.

The segments of the segmented ring-shaped member may comprise a material having a fracture elongation of more than 5 %.

This ensures that the segments are local deformable. This may even ensure an oil tight connection between the first ring and the second ring and the segments of the member when the first ring and the second ring and a segmented ring-shaped member in the grooves are pressed together with a certain force. By ensuring an oil tight connection directly at the grooves ensures a larger area with a large friction between the inner rings which counteracts the radial sliding movement of the inner rings in relation to each other.

The segmented ring-shaped member located inside the grooves of the first ring and the second ring of a bearing for avoiding cone shifting may also be used in other types of bearings having two or more rows of rollers, preferably tapered rollers, and/or balls and having two or more inner rings and one or more outer rings where one or more segmented rings are located inside the grooves of each pair of inner rings. If more than one outer ring is present one or more segmented rings may also be located inside the grooves of each pair of outer rings of the bearing.

The inventive wind turbine comprises a double tapered bearing assembly as previously described. The inventive wind turbine can comprise a generator with a rotor or a stator. The rotor or the stator may be supported by the inventive double tapered bearing assembly. Generally, the inventive wind turbine may be a gearless direct drive wind turbine. The inventive wind turbine has the same advantages as the previously described bearing assembly.

Further features, properties and advantages of the present invention will become clear from the following description of an embodiment in conjunction with the accompanying drawings. All described features are advantageous separate or in any combination with each other.

Elements corresponding to elements of previously described figures will be designated with the same reference numerals and will not be described again in detail.

Figure 1      schematically shows part of a double tapered roller bearing in a sectional view.

Figure 2      schematically shows a wind turbine.

Figure 3      schematically shows a cross section of two grooves facing each other and a member placed in the groove.

Figure 4      schematically shows part of an inventive double tapered roller bearing in a sectional view.

Figure 5      schematically shows a variant of part of an inventive double tapered roller bearing in a sectional view.

Figure 6      schematically shows a member for placing into a cavity in a sectional and perspective view.

Figure 7      schematically shows a member for placing into a cavity in a sectional view.

Figure 8      schematically shows a further variant of a member in a sectional view.

Figure 9      schematically shows a further variant of a member in a sectional view.

Figure 10      schematically shows another variant of a member in a sectional view.

Figure 11      shows a ring segment is shown in a perspective and sectional view.

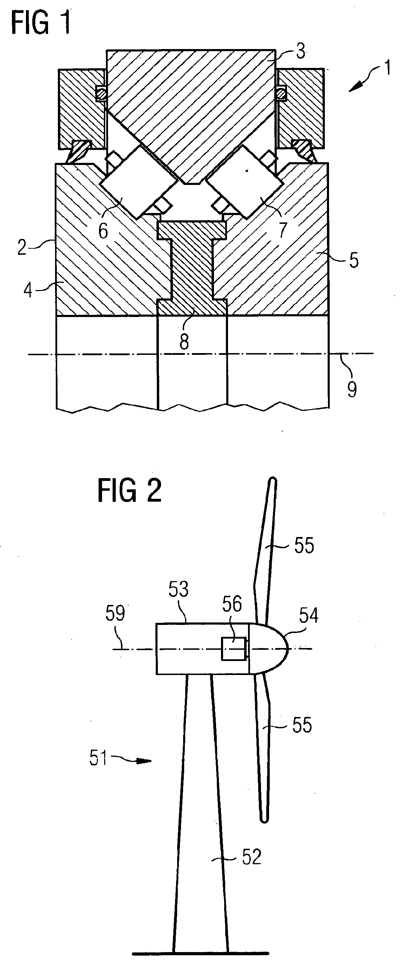

Figure 1 schematically shows part of a known double tapered roller bearing 1 in a sectional view. The bearing 1 comprises a first portion 2 and a second portion 3. The first portion 2 comprises a first ring 4 and a second ring 5. Between the first ring 4 and the second portion 3 a first row of rollers 6 is located. Between the second ring 5 and the second portion 3 a second row of rollers 7 is located. The rotation axis of the bearing 1 is indicated by reference numeral 9.

Moreover, a spacer ring 8 is placed between the first ring 4 and the second ring 5. The spacer ring 8 has an I-shape with a number of protrusions to avoid a radial movement of the first ring 4 and the second ring 5 relatively to each other. To effectively avoid a radial movement the rings 4, 5 and 8 have a diameter of high accuracy.

Figure 2 schematically shows a wind turbine 51. The wind turbine 51 comprises a tower 52, a nacelle 53 and a hub 54. The nacelle 53 is located on top of the tower 52. The hub 54 comprises a number of wind turbine blades 55. The hub 54 is mounted to the nacelle 53. Moreover, the hub 54 is pivot-mounted such that it is able to rotate about a rotation axis 59. A generator 56 is located inside the nacelle 53 or the generator may be attached to a structure part of the nacelle in such a way that it is located on one end part of the nacelle and further attached to a rotor hub. The wind turbine 51 is a direct drive wind turbine. The generator 56 comprises a rotor and a stator and an inventive double tapered bearing, as previously described, supporting the rotor or the stator.

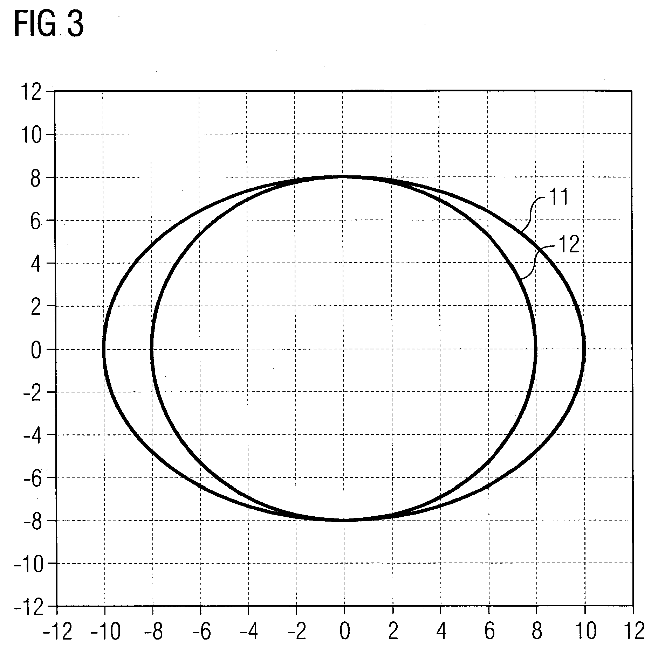

An embodiment of the present invention will now be described with reference to Figures 3 to 11. Figure 3 schematically shows a cross section of two grooves facing each other and a member placed in the groove.

Using the Lame-curve formula $\left|\dfrac{x}{a}\right|^{n} + \left|\dfrac{y}{b}\right|^{n} = 1$ .

The curve 11 is obtained by choosing the parameters a = 10, b = 7.85 and n = 1.7. The obtained hypoellipsoid cross section 11 represents the cross section of the cavity which is formed by a groove in the first ring and a groove in the second ring facing each other. The curve 12, which has a circular shape, represents the cross section of a member placed in the groove. In Figure 3 the member placed in the groove has a cross sectional diameter of 16 mm. Of course, other cross section diameters can be used.

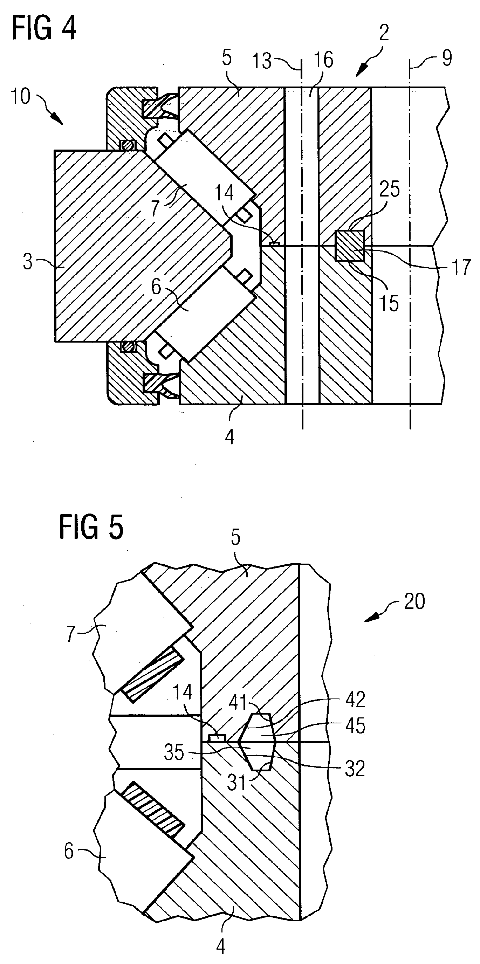

Figure 4 schematically shows part of an inventive double tapered roller bearing in a sectional view. In Figure 4 the first ring 4 comprises a first groove 15 and the second ring 5 comprises a second groove 25. Each groove 15 and 25 has a rectangular cross section. The grooves 15 and 25 are facing each other forming the cavity with a rectangular cross section. A member 17 with a corresponding rectangular cross section is placed in the cavity.

The first portion 2 comprises a hole 16 with a centre line 13 for fixation of the first ring 4 and the second ring 5 with each other. Moreover, a sealing means 14 is placed between the first ring 4 and the second ring 5 for providing a tight connection which may even be oil tight. In an alternative variant the sealing means 14 can be omitted.

Figure 5 schematically shows a variant of part of an inventive double tapered roller bearing in a sectional view. In Figure 5 the first ring 4 comprises a groove 35 with a first side 31 and a second side 32. The second ring 5 comprises a groove 45 with a first side 41 and a second side 42. The grooves 45 and 35 are facing each other. The first sides 31 and 41 are tapered in relating to the rotation axis 9. The second sides 32 and 42 are also tapered in relation to the rotation axis 9. The first sides 41 and 31 are tapered with a tapering angle which is less than the tapering angle of the second sides 32 and 42. The tapering angle is defined as the angle between the particular side 31, 32, 41, 42 with respect to the rotation axis 9.

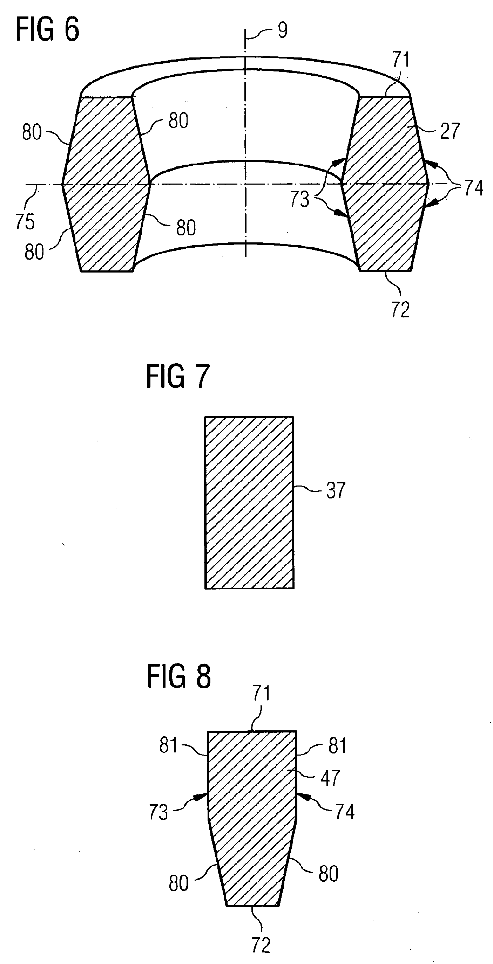

Figure 6 schematically shows a member for placing into a cavity formed by the grooves between the first ring 4 and the second ring 5 in a sectional and perspective view. The member 27 shown in Figure 6 has a shape of a section of a ring. Its cross section comprises a first end 71, a second end 72 and a first side 73 and a second side 74. The centre line perpendicular to the rotation axis 9 is indicated by reference numeral 75. The centre line 75 divides the first side 73 and the second side 74 into equal portions. The portions of the fist side 73 and the second side 74 which adjoin to the first end 71 are tapered towards the first end 71. The portions of the first side 73 and the second side 74 which adjoin to the second end 72 are tapered towards the second end 72. Consequently the cross section of the member 27 has a double trapezoid shape.

In Figure 6 the tapered portions 80 of the first side 73 are adjoining to each other. Also the tapered portions 80 of the second side 74 are adjoining each other.

Figure 7 schematically shows a member for placing into a cavity formed by the grooves of the first ring and the second ring in a sectional view. The cross section of the member 37 shown in Figure 7 has a rectangular shape.

Figure 8 schematically shows a further variant of a member in a sectional view. The member 47 shown in Figure 8 comprises a partly tapered first side 73 and a partly tapered second side 74. The first side 73 and the second side 74 are tapered towards the second end 72.

In Figure 8 the first side 73 comprises a tapered portion 80 adjoining the second end 72 and adjoining a non-tapered portion 81 of the first side 73. Also the second side 74 comprises a tapered portion 80 which adjoins to the second end 72. The tapered portion 80 of the second side 74 adjoins a non-tapered portion 81 of the second side 74. The non-tapered portions 81 of the first side 73 and of the second side 74 are adjoining the first end 71.

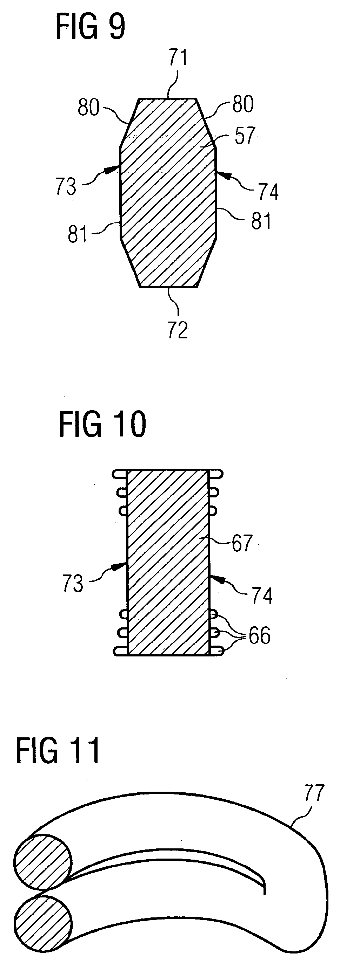

Figure 9 schematically shows a further variant of a member in a sectional view. The member 57 shown in Figure 9 comprises a first side 73 and a second side 74. Both sides 73 and 74 are partly tapered towards the first end 71 and partly tapered towards the second end 72. In Figure 9 the first side 73 comprises a non-tapered area 81 in between a first tapered area 80 towards the first end 71 and a second tapered area 80 towards a second end 72. Accordingly the second side 74 comprises a non-tapered area 81 in between a first tapered area 80 towards the first end 71 and a second tapered 80 area towards the second end 72.

Figure 10 schematically shows another variant of a member in a sectional view. The member 67 which is shown in Figure 10 has a rectangular cross section. The first side 73 and the second side 74 each comprise a number of protrusions 66. The protrusions 66 may be plastic deformable giving a better fit between the grooves in the first ring 4 and the second ring 5 and the member 67.

In Figure 11 a ring segment is shown in a perspective and sectional view. The member 77 in form of a bend ring segment has a circular cross section. It may have a cross sectional diameter of for example 8 mm. Instead of bending one ring segment as shown in Figure 11 two ring segments or members with circular cross section may be joined together, for example by means like glue, welding or similar means.

Generally, the described members may comprise brass, bronze, soft non-hardened steel, heat-treated steel or a similar material with a fracture elongation of 5 % or more.

Reference listing

| | |
|---|---|
| 1 | double tapered roller bearing |
| 2 | first portion |
| 3 | second portion |
| 4 | first ring |
| 5 | second ring |
| 6 | first row of rollers |
| 7 | second row of rollers |
| 8 | spacer ring |
| 9 | rotation axis |
| 10 | double tapered roller bearing |
| 11 | cross section of the grooves |
| 12 | cross section of the member |
| 13 | centre line |
| 14 | sealing means |
| 15 | groove |
| 16 | hole for fixation |
| 17 | member |
| 20 | double tapered roller bearing |
| 25 | groove |
| 27 | member |
| 31 | first side |
| 32 | second side |
| 35 | groove |

| | |
|---|---|
| 37 | member |
| 41 | first side |
| 42 | second side |
| 45 | groove |
| 47 | member |
| 51 | wind turbine |
| 52 | tower |
| 53 | nacelle |
| 54 | hub |
| 55 | blade |
| 56 | generator |
| 57 | member |
| 59 | rotation axis |
| 66 | protrusions |
| 67 | member |
| 71 | first end |
| 72 | second end |
| 73 | first side |
| 74 | second side |
| 75 | centre line |
| 77 | member |
| 80 | tapered portion |
| 81 | non-tapered portion |

**Claims**

1. A double row tapered bearing assembly (10, 20) comprising a first portion (2) and a second portion (3), the first portion comprising a first ring (4) and a second ring (5), the first ring (4) being connected with the second portion (3) by means of at least one row of tapered rollers (6) or balls and the second ring (5) being connected with the second portion (3) by means of at least one row of tapered rollers (7) or balls; wherein the first ring (4) and the second ring (5) comprise at least one groove (15, 25, 35, 45), the at least one groove (15) in the first ring (4) facing the at least one groove (25) in the second ring (5) forming a cavity, and at least one member (17, 27, 37, 47, 57, 67, 77) is placed in the cavity,
**characterised in that**
the at least one member (17, 27, 37, 47, 57, 67, 77) comprises brass, bronze, soft non-hardened steel or heat-treated steel with a fracture elongation of at least 5%.

2. The double row tapered bearing assembly (10, 20) as claimed in claim 1,
**characterised in that**
the groove (15, 25, 35, 45) has a rectangular or a tapered or a circular or an at least partly ellipsoid or an at least partly hypoellipsoid or an at least partly hyperellipsoid cross section.

3. The double row tapered bearing assembly (10, 20) as claimed in claim 1 or claim 2,
**characterised in that**

the at least one member (17, 27, 37, 47, 57, 67, 77) placed in the groove comprises at least one segment of a ring.

4. The double row tapered bearing assembly (10, 20) as claimed in any of the claims 1 to 3,
**characterised in that**
the at least one member (17, 27, 37, 47, 57, 67, 77) placed in the groove (15, 25, 35, 45) has a rectangular or a tapered or a circular or an at least partly ellipsoid or an at least partly hypoellipsoid or an at least partly hyperellipsoid cross section.

5. The double row tapered bearing assembly (10, 20) as claimed in any of the claims 1 to 4,
**characterised in that**
the at least one member (17, 27, 37, 47, 57, 67, 77) placed in the groove (15, 25, 35, 45) has a circular cross section with a cross sectional diameter of at least 5 mm.

6. The double row tapered bearing assembly (10, 20) as claimed in any of the claims 1 to 5,
**characterised in that**
the at least one member (17, 27, 37, 47, 57, 67, 77) placed in the groove (15, 25, 35, 45) runs all around the circumference of the groove (15, 25, 35, 45) except for a small gap to allow for tolerances.

7. The double row tapered bearing assembly (10, 20) as claimed in any of the claims 1 to 6,
**characterised in that**
the at least one member (17, 27, 37, 47, 57, 67, 77) placed in the groove (15, 25, 35, 45) consists of at least one thread with a fracture elongation of at least 5%.

8. The double row tapered bearing assembly (10, 20) as claimed in any of the claims 1 to 7,
**characterised in that**
the at least one member (17, 27, 37, 47, 57, 67, 77) placed in the groove (15, 25, 35, 45) comprises two sides with a different tapering angle.

9. The double row tapered bearing assembly (10, 20) as claimed in any of the claims 1 to 8,
**characterised in that**
the at least one member (17, 27, 37, 47, 57, 67, 77) placed in the groove (15, 25, 35, 45) comprises a side with a tapering angle which is less than the tapering angle of a side of the groove (15, 25, 35, 45) facing the side of the member (17, 27, 37, 47, 57, 67, 77).

10. The double row tapered bearing assembly (10, 20) as claimed in any of the claims 1 to 9,
**characterised in that**
the at least one member (17, 27, 37, 47, 57, 67, 77) comprises segments with an arc angle between 5 degrees and 180 degrees.

11. The double row tapered bearing assembly (10, 20) as claimed in claim 10,
    **characterised in that**
    the at least one member (17, 27, 37, 47, 57, 67, 77) comprises segments with an arc angle between 10 degrees and 20 degrees.

12. The double row tapered bearing assembly (10, 20) as claimed in any of the claims 1 to 11,
    **characterised in that**
    the at least one member (17, 27, 37, 47, 57, 67, 77) comprises at least one plastic deformable area and/or at least one protrusion (66).

13. A wind turbine (51) comprising a double row tapered bearing assembly (10, 20) as claimed in any of the claims 1 to 12.

**Patentansprüche**

1. Zweireihige Schräglagerbaugruppe (10, 20), die einen ersten Abschnitt (2) und einen zweiten Abschnitt (3) umfasst:

   wobei der erste Abschnitt einen ersten Ring (4) und einen zweiten Ring (5) umfasst, wobei der erste Ring (4) mit Hilfe von mindestens einer Reihe Kegelrollen (6) oder
   Kugeln mit dem zweiten Abschnitt (3) und der zweite Ring (5) mit Hilfe von mindestens einer Reihe Kegelrollen (7) oder Kugeln mit dem zweiten Abschnitt (3) verbunden ist,
   wobei der erste Ring (4) und der zweite Ring (5) mindestens eine Nut (15, 25, 35, 45) umfassen, wobei die mindestens eine Nut (15) in dem ersten Ring (4) der mindestens einen Nut (25) in dem zweiten Ring (5) gegenüberliegt, so dass ein Hohlraum entsteht, und
   mindestens ein Element (17, 27, 37, 47, 57, 67, 77) in dem Hohlraum untergebracht ist,

   **dadurch gekennzeichnet, dass**

   das mindestens eine Element (17, 27, 37, 47, 57, 67, 77) Messing, Bronze, ungehärteten Weichstahl oder vergüteten Stahl mit einer Bruchdehnung von mindestens 5% umfasst.

2. Zweireihige Schräglagerbaugruppe (10, 20) nach Anspruch 1,
   **dadurch gekennzeichnet, dass**
   die Nut (15, 25, 35, 45) einen rechteckigen oder einen kegelförmigen oder einen kreisförmigen oder einen zumindest teilweise elliptischen oder einen zumindest teilweise hypoelliptischen oder einen zumindest teilweise hyperelliptischen Querschnitt aufweist.

3. Zweireihige Schräglagerbaugruppe (10, 20) nach Anspruch 1 oder 2,
   **dadurch gekennzeichnet, dass**
   das mindestens eine in der Nut untergebrachte Element (17, 27, 37, 47, 57, 67, 77) mindestens ein Segment eines Rings umfasst.

4. Zweireihige Schräglagerbaugruppe (10, 20) nach einem der Ansprüche 1 bis 3,
   **dadurch gekennzeichnet, dass**
   das mindestens eine in der Nut (15, 25, 35, 45) untergebrachte Element (17, 27, 37, 47, 57, 67, 77) einen rechtwinkligen oder einen kegelförmigen oder einen kreisförmigen oder einen zumindest teilweise elliptischen oder einen zumindest teilweise hypoelliptischen oder einen zumindest teilweise hyperelliptischen Querschnitt aufweist.

5. Zweireihige Schräglagerbaugruppe (10, 20) nach einem der Ansprüche 1 bis 4,
   **dadurch gekennzeichnet, dass**
   das mindestens eine in der Nut (15, 25, 35, 45) untergebrachte Element (17, 27, 37, 47, 57, 67, 77) einen kreisförmigen Querschnitt mit einem Querschnittsdurchmesser von mindestens 5 mm aufweist.

6. Zweireihige Schräglagerbaugruppe (10, 20) nach einem der Ansprüche 1 bis 5,
   **dadurch gekennzeichnet, dass**
   das mindestens eine in der Nut (15, 25, 35, 45) untergebrachte Element (17, 27, 37, 47, 57, 67, 77) bis auf einen kleinen Spalt zur Berücksichtigung von Toleranzen um den gesamten Umfang der Nut (15, 25, 35, 45) herum verläuft.

7. Zweireihige Schräglagerbaugruppe (10, 20) nach einem der Ansprüche 1 bis 6,
   **dadurch gekennzeichnet, dass**
   das mindestens eine in der Nut (15, 25, 35, 45) untergebrachte Element (17, 27, 37, 47, 57, 67, 77) aus mindestens einem Faden mit einer Bruchdehnung von mindestens 5% besteht.

8. Zweireihige Schräglagerbaugruppe (10, 20) nach einem der Ansprüche 1 bis 7,
   **dadurch gekennzeichnet, dass**
   das mindestens eine in der Nut (15, 25, 35, 45) untergebrachte Element (17, 27, 37, 47, 57, 67, 77) zwei Seiten mit unterschiedlichem Kegelwinkel umfasst.

9. Zweireihige Schräglagerbaugruppe (10, 20) nach einem der Ansprüche 1 bis 8,

**dadurch gekennzeichnet, dass**

das mindestens eine in der Nut (15, 25, 35, 45) untergebrachte Element (17, 27, 37, 47, 57, 67, 77) eine Seite mit einem Kegelwinkel umfasst, der kleiner ist als der Kegelwinkel einer Seite der Nut (15, 25, 35, 45), der der Seite des Elements (17, 27, 37, 47, 57, 67, 77) gegenüberliegt.

10. Zweireihige Schräglagerbaugruppe (10, 20) nach einem der Ansprüche 1 bis 9,
    **dadurch gekennzeichnet, dass**
    das mindestens eine Element (17, 27, 37, 47, 57, 67, 77) Segmente mit einem Bogenwinkel zwischen 5 Grad und 180 Grad umfasst.

11. Zweireihige Schräglagerbaugruppe (10, 20) nach Anspruch 10,
    **dadurch gekennzeichnet, dass**
    das mindestens eine Element (17, 27, 37, 47, 57, 67, 77) Segmente mit einem Bogenwinkel zwischen 10 Grad und 20 Grad umfasst.

12. Zweireihige Schräglagerbaugruppe (10, 20) nach einem der Ansprüche 1 bis 11,
    **dadurch gekennzeichnet, dass**
    das mindestens eine Element (17, 27, 37, 47, 57, 67, 77) mindestens einen plastisch verformbaren Bereich und/ oder mindestens einen Vorsprung (66) umfasst.

13. Windenergieanlage (51) mit einer zweireihigen Schräglagerbaugruppe (10, 20) nach einem der Ansprüche 1 bis 12.


**Revendications**

1. Un ensemble roulement à rouleaux coniques à deux rangées (10, 20) comprenant une première partie (2) et une deuxième partie (3),
   la première partie comprenant une première bague (4) et une deuxième bague (5), la première bague (4) étant raccordée à la deuxième partie (3) au moyen d'au moins une rangée de rouleaux coniques (6) ou de billes et la deuxième bague (5) étant raccordée à la deuxième partie (3) au moyen d'au moins une rangée de rouleaux coniques (7) ou de billes, la première bague (4) et la deuxième bague (5) comprenant au moins une rainure (15, 25, 35, 45), la au moins une rainure (15) dans la première bague (4) faisant face à la au moins une rainure (25) dans la deuxième bague (5) formant une cavité, et au moins un élément (17, 27, 37, 47, 57, 67, 77) est placé dans la cavité,
   **caractérisé en ce que**
   le au moins un élément (17, 27, 37, 47, 57, 67, 77) contient du cuivre, du bronze, de l'acier doux non durci ou de l'acier trempé avec un allongement à la rupture d'au moins 5%.

2. L'ensemble roulement à rouleaux coniques à deux rangées (10, 20) selon la revendication 1,
   **caractérisé en ce que**
   la rainure (15, 25, 35, 45) possède une section transversale rectangulaire ou conique ou circulaire ou au moins partiellement ellipsoïde ou au moins partiellement hypoellipsoïde ou au moins partiellement hyperellipsoïde.

3. L'ensemble roulement à rouleaux coniques à deux rangées (10, 20) selon la revendication 1 ou 2, **caractérisé en ce que**
   le au moins un élément (17, 27, 37, 47, 57, 67, 77) placé dans la rainure comprend au moins un segment d'une bague.

4. L'ensemble roulement à rouleaux coniques à deux rangées (10, 20) selon l'une quelconque des revendications 1 à 3,
   **caractérisé en ce que**
   le au moins un élément (17, 27, 37, 47, 57, 67, 77) placé dans la rainure (15, 25, 35, 45) possède une section transversale rectangulaire ou conique ou circulaire ou au moins partiellement ellipsoïde ou au moins partiellement hypoellipsoïde ou au moins partiellement hyperellipsoïde.

5. L'ensemble roulement à rouleaux coniques à deux rangées (10, 20) selon l'une quelconque des revendications 1 à 4,
   **caractérisé en ce que**
   le au moins un élément (17, 27, 37, 47, 57, 67, 77) placé dans la rainure (15, 25, 35, 45) possède une section transversale circulaire avec un diamètre de section transversale d'au moins 5 mm.

6. L'ensemble roulement à rouleaux coniques à deux rangées (10, 20) selon l'une quelconque des revendications 1 à 5,
   **caractérisé en ce que**
   le au moins un élément (17, 27, 37, 47, 57, 67, 77) placé dans la rainure (15, 25, 35, 45) s'étend tout autour de la circonférence de la rainure (15, 25, 35, 45) à l'exception d'un petit espace réservé à des tolérances.

7. L'ensemble roulement à rouleaux coniques à deux rangées (10, 20) selon l'une quelconque des revendications 1 à 6,
   **caractérisé en ce que**
   le au moins un élément (17, 27, 37, 47, 57, 67, 77) placé dans la rainure (15, 25, 35, 45) comprend au moins un filetage avec un allongement à la rupture d'au moins 5 %.

8. L'ensemble roulement à rouleaux coniques à deux rangées (10, 20) selon l'une quelconque des revendications 1 à 7,

**caractérisé en ce que**

le au moins un élément (17, 27, 37, 47, 57, 67, 77) placé dans la rainure (15, 25, 35, 45) comprend deux côtés avec un angle de conicité différent.

9. L'ensemble roulement à rouleaux coniques à deux rangées (10, 20) selon l'une quelconque des revendications 1 à 8,

**caractérisé en ce que**

le au moins un élément (17, 27, 37, 47, 57, 67, 77) placé dans la rainure (15, 25, 35, 45) comprend un côté avec un angle de conicité qui est inférieur à l'angle de conicité d'un côté de la rainure (15, 25, 35, 45) faisant face au côté de l'élément (17, 27, 37, 47, 57, 67, 77).

10. L'ensemble roulement à rouleaux coniques à deux rangées (10, 20) selon l'une quelconque des revendications 1 à 9,

**caractérisé en ce que**

le au moins un élément (17, 27, 37, 47, 57, 67, 77) comprend des segments avec un angle d'arc situé entre 5 degrés et 180 degrés.

11. L'ensemble roulement à rouleaux coniques à deux rangées (10, 20) selon la revendication 10,

**caractérisé en ce que**

le au moins un élément (17, 27, 37, 47, 57, 67, 77) comprend des segments avec un angle d'arc situé entre 10 degrés et 20 degrés.

12. L'ensemble roulement à rouleaux coniques à deux rangées (10, 20) selon l'une quelconque des revendications 1 à 11,

**caractérisé en ce que**

le au moins un élément (17, 27, 37, 47, 57, 67, 77) comprend au moins une zone déformable en plastique et/ou au moins une saillie (66).

13. Une turbine éolienne (51) comprenant un ensemble roulement à rouleaux coniques à deux rangées (10, 20) selon l'une quelconque des revendications 1 à 12.

FIG 1

FIG 2

## FIG 3

FIG 4

FIG 5

FIG 6

FIG 7

FIG 8

## FIG 9

## FIG 10

## FIG 11

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007062056 A1
- JP 11321211 A
- DE 102007042770 A1
- FR 2592107
- JP 2010164101 A
- US 2615767 A